# EUROPEAN PATENT APPLICATION

(11) **EP 4 525 420 A1**
(43) Date of publication of application: **19.03.2025**
(21) Application number: 23803289.0
(22) Date of filing: 05.04.2023
(51) Int. Cl.: H04M 1/72403, G06F 3/0481, G06Q 30/0251

(54) **TERMINAL DEVICE, METHOD, AND PROGRAM**

(30) Priority: 13.05.2022 JP 2022079827
(71) Applicant: Niamelo Inc., Tokyo 150-0011 (JP)
(72) Inventor: SAKATA, Hiroki, Tokyo 150-0011 (JP)
(74) Representative: Reddie & Grose LLP
(86) International application number: PCT/JP2023/014044
(87) International publication number: WO 2023/218806

(57) **Abstract**

[Problem]A contact with a business operator providing a web page is more effectively executed.

[Solution] A terminal device according to an embodiment is a terminal device including at least one processor, in which the at least one processor is configured to execute processes to: detect, via an input interface, a user's operation on contact information of a business operator included in a screen outputted by an application program provided by the business operator;
output, via an output interface, notification information related to the screen and an execution button for executing a contact with the business operator based on the contact information in response to the detection; and
initiate the contact with the business operator based on the contact information if a user's operation on the execution button is detected via the input interface.

## Description

### Technical Field

The present disclosure relates to a terminal device, a method, and a program for contacting a business operator providing a screen outputted by an application program.

### Background Art

For example, there has been known a pop-up advertisement in which notification information such as an advertisement is displayed in a superimposed manner on a screen of a web page when the web page is accessed by a terminal device. For example, Patent Literature 1 discloses an advertisement display device for performing pop-up advertisement. However, there is no known pop-up advertisement that supports an operation on a button indicating a contact point such as a telephone number displayed on a screen of a web page.

### Citation List

### Patent Literature

Patent Literature 1: JP 2006-084922 A

### Summary of Invention

### Technical Problem

The present embodiment has been made in view of the above background, and an object thereof is to provide a terminal device, a program, and a method for more effectively contacting a business operator providing a screen outputted by an application program.

### Solution to Problem

A terminal device according to an embodiment is a terminal device including at least one processor, in which the at least one processor is configured to execute processes to: detect, via an input interface, a user's operation on contact information to a business operator included in a screen outputted by an application program provided by the business operator; output, via an output interface, notification information related to the screen and an execution button for executing a contact with the business operator based on the contact information in response to the detection; and initiate the contact with the business operator based on the contact information if a user's operation on the execution button is detected via the input interface.

A method according to an embodiment is a method executed by at least one processor included in a computer, the method comprising: detecting, via an input interface, a user's operation on contact information of a business operator included in a screen outputted by an application program provided by the business operator; outputting, via an output interface, notification information related to the screen and an execution button for executing a contact with the business operator based on the contact information in response to the detection; and initiating a contact with the business operator based on the contact information if a user's operation on the execution button is detected via the input interface.

A program according to an embodiment causes at least one processor included in a computer to function to execute processes for: detecting, via an input interface, a user's operation on contact information of a business operator included in a screen outputted by an application program provided by the business operator; outputting, via an output interface, notification information related to the screen and an execution button for executing a contact with the business operator based on the contact information in response to the detection; and initiating the contact with the business operator based on the contact information if a user's operation on the execution button is detected via the input interface.

### Advantageous Effects of Invention

The terminal device, the method, and the program according to the present disclosure are capable of more effectively contacting a business operator providing a screen outputted by an application program.

Note that the above-described effect is merely exemplary for convenience of description, and is not limiting. In addition to or instead of the above-described effect, any effect described in the present disclosure or any effect obvious to those skilled in the art can be exhibited.

### Brief Description of Drawings

[Fig. 1] Fig. 1 is a diagram illustrating an example of a screen outputted to a display 140 during a process of a user terminal device 100-1 in a system 1 according to an embodiment of the present disclosure.
[Fig. 2] Fig. 2 is a diagram illustrating a configuration of the system 1.
[Fig. 3] Fig. 3 is a diagram illustrating a configuration of a terminal device 100 illustrated in Fig. 2.
[Fig. 4] Fig. 4 is a diagram illustrating a contact management information table used during a process of an administrator terminal device 100-2.
[Fig. 5] Fig. 5 is a diagram illustrating a flow of a process executed by the user terminal device 100-1 according to an embodiment of the present disclosure.
[Fig. 6] Fig. 6 is a diagram illustrating a flow of a process executed by the administrator terminal device 100-2 according to an embodiment of the present disclosure.
[Fig. 7A] Fig. 7A is a diagram illustrating an example of a screen outputted to the display 140 during the process of the user terminal device 100-1.
[Fig. 7B] Fig. 7B is a diagram illustrating an example of a screen outputted to the display 140 during the process of the user terminal device 100-1.
[Fig. 7C] Fig. 7C is a diagram illustrating an example of a screen outputted to the display 140 during the process of the user terminal device 100-1.
[Fig. 7D] Fig. 7D is a diagram illustrating an example of a screen outputted to the display 140 during the process of the user terminal device 100-1.
[Fig. 8] Fig. 8 is a diagram illustrating an example of a screen outputted to the display 140 during a process of a business operator terminal device 100-3.
[Fig. 9] Fig. 9 is a diagram illustrating a flow of a process executed by the user terminal device 100-1 according to an embodiment of the present disclosure.

### Description of Embodiments

### 1. Outline of Process of System 1

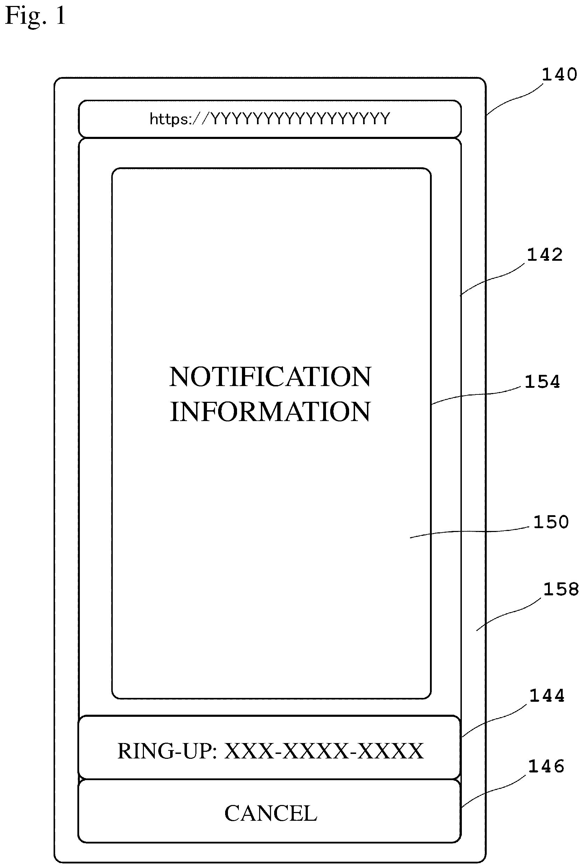

Fig. 1 is a diagram illustrating an example of a screen outputted to a display 140 during a process of a user terminal device 100-1 in a system 1 according to an embodiment of the present disclosure. Specifically, Fig. 1 is a diagram illustrating an example of a screen displayed on a display via an output interface 111 in the user terminal device 100-1 as the process is executed by the system 1. The screen is a screen outputted by an application program installed in advance in the user terminal device 100-1, and is a screen provided by a business operator providing a product or a service. A typical example of such a screen is a screen of a web page outputted by a browser application program, but the screen is not limited thereto, and includes screens provided by various application programs such as an SNS application program, a game application program, a mail application program, a moving image/still image/sound reproduction application program, and application programs for providing other services. Note that, in the following description, for convenience of description, it will be assumed as an example that the screen is a screen of a web page.

For example, first, the user searches for a web page provided by a desired business operator using a search engine provided on the Internet using the user terminal device 100-1. Then, when the web page is accessed, a web page provided initially by the business operator is outputted on the display. Note that the web page initially displayed on the web site provided by the business operator in this manner is also referred to as a landing page or the like. Note that, although it will be assumed as an example in the following description that the web page is a landing page, the web page may be a web page other than the landing page.

Here, the landing page may include a phone number as contact information of the business operator and a call button for contacting the business operator by telephone. When the user performs an operation (e.g., a tap operation) on the phone number or the call button, a call application program for initiating a contact with the business operator is activated, and a ring-up button is outputted to the display. In the present embodiment, as illustrated in Fig. 1, not only the ring-up button is simply outputted, but also notification information related to the web page provided by the business operator is outputted. According to Fig. 1, notification information 154 is outputted to the display 140 in a superimposed manner on a web page 142 that is a landing page provided by the business operator, and a ring-up button 144 and a cancel button 146 for canceling the ringing up are outputted to the display 140 without being superimposed on the notification information.

Thereafter, when the user performs an operation (e.g., a tap operation) on the ring-up button 144, a contact with the business operator is initiated by the activated call application program.

Here, after the user operates on the phone number or the call button included in the landing page, the call application program is activated, and then the user operates the ring-up button, whereby the contact with the business operator is first initiated. That is, an additional operation (an operation on the ring-up button) is required between the time when the user first thinks of making a contact (when the user operates on the phone number or the call button included in the landing page) and the time when the contact is actually initiated. For this reason, for example, the user may hesitate to make a contact during this time, and may abandon actually making a contact. Therefore, in the present embodiment, by outputting the notification information together with the ring-up button when the ring-up button is outputted as described above, it is possible to prevent abandonment, enabling effective realization of the user's contact. More specifically, in the present embodiment, it is possible to more effectively improve the probability that the user contacts the business operator.

Note that, in the present disclosure, the terms "user", "administrator", and "business operator" are used, but these terms are merely used to distinguish between a person who accesses a web page as a user, a person who provides the web page as a business operator, and a person who manages a contact of the user with the business operator as an administrator. Therefore, the user may be an administrator or a business operator, the administrator may be a user or a business operator, or the business operator may be a user or an administrator. In addition, the user, the administrator, or the business operator does not refer to a specific individual, and may be a plurality of persons, or may refer to an organization such as a corporation, a company, or a group.

Furthermore, in the present disclosure, the "contact" means that the user communicates with the business operator. That is, the contact is not limited to a specific contact method (e.g., a telephone call), and the contact may be executed by any of the various contact methods such as a telephone call, an e-mail, an online meeting, and an SNS. In addition, in the present disclosure, a "contact application program" refers to an application program for executing a contact. Therefore, in accordance with the contact methods, various application programs such as a call application program, an e-mail application program, an online meeting application program, and an SNS application program can be used. Furthermore, while a web page is provided by, for example, a browser application program, a contact with the business operator may also be executed by the browser application program. Conversely, an access to a web page may be executed by the contact application program.

In addition, in the present disclosure, the "notification information" merely refers to information outputted in association with a web page. Therefore, the notification information is not limited to notification information physically associated with a web page based on identification information or the like in advance, and includes notification information related in terms of content such as including content redundant with the web page. A typical example is information for encouraging contact with the business operator providing the web page, the information including images and descriptions of products and services introduced on the web page.

### 2. Configuration of System 1

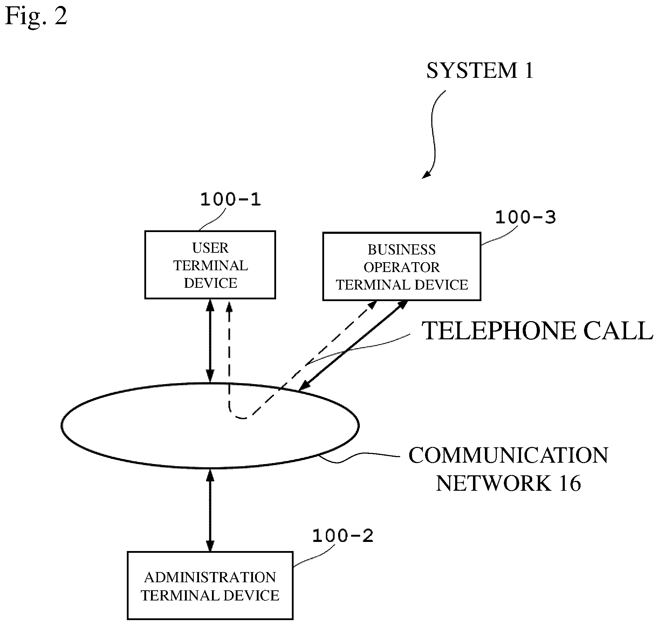

Fig. 2 is a diagram illustrating a configuration of the system 1. As illustrated in Fig. 2, the system 1 includes a user terminal device 100-1, an administrator terminal device 100-2, a business operator terminal device 100-3, and a communication network 16. The communication network 16 includes at least a data communication system such as the internet, or a wired phone communication system and a wireless phone communication system such as a mobile phone communication system.

Among them, the user terminal device 100-1 is a terminal device used by the user to access a web page provided by a business operator. In addition, the administrator terminal device 100-2 is a terminal device used by an administrator who manages a contact of the user to a business operator. In addition, the business operator terminal device 100-3 is a terminal device used by a business operator who provides a web page. Note that the names of the terminal devices are given merely for mutual distinction and the terminals can perform any function depending on conditions. For example, the user terminal device 100-1 may function as the administrator terminal device 100-2 or the business operator terminal device 100-3 in some cases.

The user terminal device 100-1, the administrator terminal device 100-2, and the business operator terminal device 100-3 are connected to the communication network 16 via the communication network 16, and communicate information and data to each other. Furthermore, as indicated by a dotted arrow in Fig. 2, the user of the user terminal device 100-1 and the business operator using the business operator terminal device 100-3 can contact each other by a call, for example via a wired telephone communication system and a wireless telephone communication system included in the communication network 16. Note that although it is illustrated in Fig. 2 that the administrator terminal device 100-2 and the business operator terminal device 100-3 are separate devices, they may constitute a single device.

### 3. Configuration of Terminal Device 100

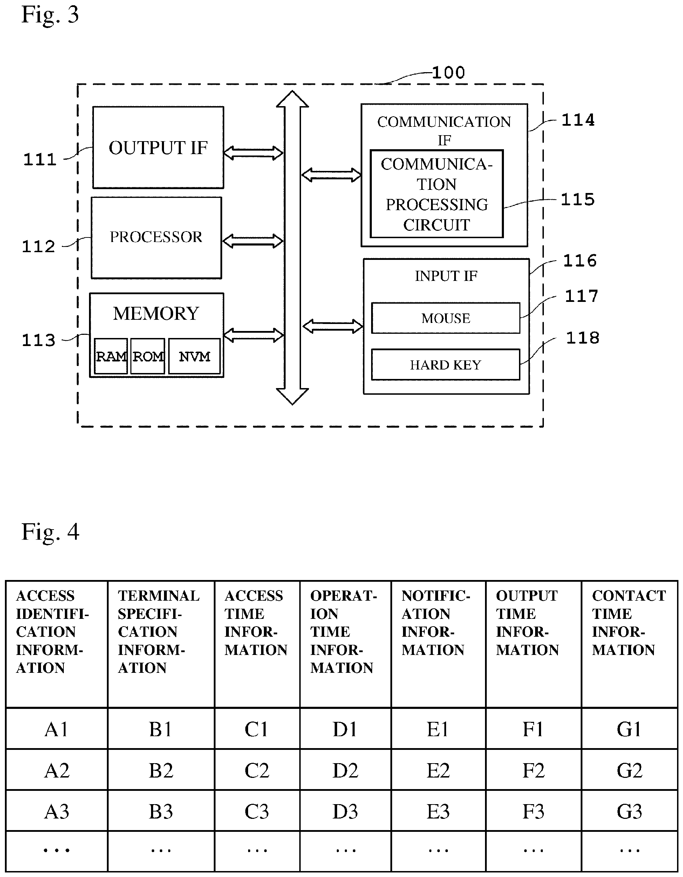

Hereinafter, configurations of the user terminal device 100-1, the administrator terminal device 100-2, and the business operator terminal device 100-3 will be described with reference to Fig. 3. Note that, hereinafter, the user terminal device 100-1, the administrator terminal device 100-2, and the business operator terminal device 100-3 may be collectively referred to as terminal devices 100 when it is not necessary to distinguish them. The user terminal device 100-1 is, for example, a smartphone, a tablet personal computer (PC), a notebook PC, or the like owned and used by each common individual user. The administrator terminal device 100-2 is, for example, a desktop PC, a PC server, or a server computer used by an administrator who manages a contact between the user terminal device 100-1 and the business operator terminal device 100-3. The business operator terminal device 100-3 is a desktop PC, a PC server, or a server computer operated by a business operator that provides business to a user as a consumer or the like. However, the types of terminal devices described herein are mere examples, and any type of terminal device may be adopted.

Fig. 3 is a diagram exemplifying a configuration of the terminal device 100 illustrated in Fig. 2. Note that the terminal device 100 does not need to include all of the components illustrated in Fig. 3, and some of the components of the terminal device 100 may be omitted. Furthermore, other components than those illustrated in Fig. 3 may be added to the terminal device 100. As illustrated in Fig. 3, the terminal device 100 includes an output interface (output IF) 111, a processor 112, a memory 113, a communication interface (communication IF) 114, and an input interface (input IF) 116 connected to each other via a bus. The memory 113 includes a RAM, a ROM, a non-volatile memory (NVM), an HDD (not illustrated), an SSD (not illustrated), etc. The input interface 116 includes a mouse 117, a hard key 118, etc. as input devices.

The output interface 111 connects output devices such as a speaker (not illustrated) and the display 140 (Fig. 1) to the terminal device 100. Note that these output devices may be disposed outside the terminal device 100 and connected to the terminal device 100 via the output interface 111. In addition, these output devices may be configured integrally with the terminal device 100 and connected to the output interface 111, as in the user terminal device 100-1 illustrated in Fig. 1. For example, the output interface 111 functions as an output unit that reads image information stored in the memory 113 and performs various displays in response to instructions from the processor 112. Note that the display 140 is constituted by including, for example, a liquid crystal display or an organic EL display. The speaker connected to the output interface 111 functions as, for example, an audio output unit that outputs a sound signal obtained from sound information for making a telephone call received by the terminal device 100.

The processor 112 is constituted by including one or more CPUs (microprocessors) or a combination of one or more CPUs and one or more GPUs specialized for image processing, and peripheral circuits thereof. The processor 112 functions as a control unit that controls other components connected thereto on the basis of various programs stored in the memory 113. Specifically, the processor 112 reads from the memory 113 an application program including a predetermined instruction command for executing a summarization process according to the embodiment and a program including a predetermined instruction command for processes of an OS, and executes the application program and the program.

The OS provides various functions for installing, uninstalling, activating and executing an application program and making the application program resident. In addition, the OS provides functions for the processor 112 to execute application program. These functions provided by the OS include functions required for communication between the terminal devices 100.

The RAM is a memory into and from which data required for processes is written and read while the application program and the OS program stored in the ROM are processed by the processor 112. The non-volatile memory is a memory that retains written data without supply of power. The processor 112 writes data obtained by executing the programs into the non-volatile memory, or reads the written data from the non-volatile memory.

The communication interface 114 functions as a communication unit that connects the communication network 16 and the terminal device 100 via a communication processing circuit 115 and an antenna, and transmits and receives data between the terminal devices 100 connected to the communication network 16. The communication processing circuit 115 performs a communication process for communicating information between the communication network 16 and the terminal device 100 via the antenna using a wideband or narrowband wireless communication scheme. Note that the wideband wireless communication scheme is, for example, an LTE scheme, and the narrowband wireless communication scheme is, for example, IEEE802-11, Bluetooth (registered trademark), or the like. Furthermore, the communication processing circuit 115 may perform a process for wired communication instead of or in addition to wireless communication.

The input interface 116 is connected to input devices such as a microphone (not illustrated) for a call, the mouse 117, and the hard key 118 by wired communication or wireless communication, and functions as an input unit that receives user's operations to receive inputs of various types of information. Examples of the input interface 116 include a serial port, a parallel port, and a USB. Furthermore, in a case where the mouse 117 is connected by wireless communication (e.g., Bluetooth (registered trademark)), a component having a wireless communication function can also function as the input interface 116 and the communication interface 114.

The microphone connected to the input interface 116 functions as, for example, an audio input unit that receives a telephone call sound and outputs the sound as sound information to the processor 112 via the input interface 116. The mouse 117 includes a sensor that detects its movement, a left button, a right button, etc. The mouse 117 detects a user's operation of moving a mouse pointer displayed on the display. The hard key 118 includes a mechanical switch, receives a user's operation on the terminal device 100, and outputs the user's operation to the processor 112 through the input interface 116. Note that the terminal device 100 and the hard key 118 may be configured integrally or separately. In a case where the terminal device 100 and the hard key 118 are configured separately, the terminal device 100, the mouse 117, and the hard key 118 are connected to each other by wireless communication or by wired communication.

### 4. Operations of Processor 112, etc. of User Terminal Device 100-1

Operations of the processor 112 and the memory 113 of the user terminal device 100-1 will be described. In particular, the processor 112 reads from the memory 113 and executes an application program including a predetermined instruction command for detecting, via the input interface 116, a user's operation on contact information of the business operator on the web page 142 provided by the business operator and including the contact information. The processor 112, in response to the detection, reads from the memory 113 and executes an application program including a predetermined instruction command for outputting, via the output interface 111, the notification information 154 related to the web page 142 and an execution button (e.g., the ring-up button 144) for executing a contact with the business operator based on the contact information. In addition, the processor 112 reads from the memory 113 and executes an application program including a predetermined instruction command for initiating a contact with the business operator based on the contact information upon detecting the user's operation on the execution button via the input interface 116.

In addition, the memory 113 of the user terminal device 100-1 stores an application program including a predetermined instruction command for detecting, via the input interface 116, a user's operation on contact information of the business operator on the web page 142 provided by the business operator provided by the business operator and including the contact information. In addition, the memory 113 stores an application program including a predetermined instruction command for outputting, via the output interface 111, the notification information 154 related to the web page 142 and an execution button (e.g., the ring-up button 144) for executing a contact with the business operator based on the contact information in response to the detection. In addition, the memory 113 of the user terminal device 100-1 stores an application program including a predetermined instruction command for initiating a contact with the business operator based on the contact information upon detecting the user's operation on the execution button via the input interface 116. These application programs are read from a storage medium by the processor 112 of the user terminal device 100-1, and stored in the memory 113 of the user terminal device 100-1. Alternatively, these application programs are received by the processor 112 of the user terminal device 100-1 from another device via the communication interface 114, and stored in the memory 113 of the user terminal device 100-1.

### 5. Operations of Processor 112, etc. of Administrator Terminal Device 100-2

Here, the operations of the processor 112 and the memory 113 of the administrator terminal device 100-2 will be described. In particular, the processor 112 of the administrator terminal device 100-2 reads from the memory 113 and executes an application program including a predetermined instruction command for acquiring contact management information indicating a history of a series of processes including a procedure until a contact from the user of the user terminal device 100-1 to the business operator using the business operator terminal device 100-3 is performed. In addition, the processor 112 of the administrator terminal device 100-2 reads from the memory 113 and executes an application program including a predetermined instruction command for aggregating the acquired contact management information. In addition, the processor 112 of the administrator terminal device 100-2 reads from the memory 113 and executes an application program including a predetermined instruction command for outputting the aggregated contact management information.

In particular, the memory 113 of the administrator terminal device 100-2 stores an application program including a predetermined instruction command for acquiring contact management information indicating a contact of the user of the user terminal device 100-1 with the business operator using the business operator terminal device 100-3. In addition, the processor 112 of the administrator terminal device 100-2 stores an application program including a predetermined instruction command for aggregating the acquired contact management information. In addition, the processor 112 of the administrator terminal device 100-2 stores an application program including a predetermined instruction command for outputting the aggregated contact management information. Similarly to the applications stored in the memory 113 of the user terminal device 100-1, these application programs are also stored in the memory 113 of the administrator terminal device 100-2 by the processor 112 of the administrator terminal device 100-2.

### 6. Information used for Process in Administrator Terminal Device 100-2

In the present embodiment, the processor 112 of the user terminal device 100-1 can track processes performed in the user terminal device 100-1, for example, for a certain period of time after an access to a web page is initiated. That is, when an access to a web page including contact information of a business operator specified in advance is initiated, the processor 112 of the user terminal device 100-1 tracks an operation on the contact information, an operation on the ring-up button, and various types of processes resulting from these operations, and accumulates them in the memory 113 as history information. Specifically, the processor 112 of the user terminal device 100-1 reads a tag (e.g., JavaScript (registered trademark)) embedded in the web page, acquires information such as terminal specification information (e.g., user ID information, terminal identification information, and the like) for specifying the user terminal device 100-1, a type of the user terminal device 100-1, a type of the browser application program, and time of access, and stores the acquired information in the memory 113 in association with the generated identification information. In addition, upon detecting a user's operation on the contact information of the business operator included in the web page, the processor 112 stores the time when the operation is performed in the memory 113 in association with the identification information. Furthermore, in a case where notification information is outputted by the operation on the contact information, the processor 112 stores the time of outputting and the outputted notification information in the memory 113 in association with the identification information. In addition, upon detecting the user's operation on the ring-up button, the processor 112 stores the time when the operation on the ring-up button is performed, as the time when the contact with the business operator is performed, in association with the identification information in the memory 113. Then, if a certain period of time elapses after the access to the web page is initiated, the processor 112 transmits various types of information accumulated in the memory 113 as described above to the administrator terminal device 100-2 via the communication interface 114.

That is, in the business operator terminal device 100-3, the information accumulated in the memory 113 of each user terminal device 100-1 is acquired as contact management information in association with the identification information. Fig. 4 is a diagram illustrating a contact management information table used during a process of the administrator terminal device 100-2. According to Fig. 4, the contact management information table stores various types of tracked information (e.g., terminal specification information, access time information, operation time information, notification information, output time information, contact time information, etc.) in association with access identification information newly generated by accessing the web page in the user terminal device 100-1.

The terminal specification information is information for specifying the user terminal device 100-1 by which the web page is accessed, and for example, user ID information, terminal identification information, or the like can be used. The access time information is information indicating a time for which the web page is accessed. The operation time information is information indicating a time when a user's operation on the contact information of the business operator included in the web page is detected. The notification information is information indicating at least one of content and a type of notification information outputted by detecting the user's operation on the contact information. The output time information is information indicating a time when the notification information is outputted. The contact time information is a time generated resulting from a user's operation on the ring-up button, and is information indicating at least one of a time when the operation on the ring-up button is performed and a time when the contact with the business operator is performed. Note that, although not specifically illustrated, other information such as the type of user terminal device 100-1, the type of browser application program, information for specifying the contacted business operator (e.g., business operator identification information), and information for specifying the accessed web page (e.g., web page identification information) may also be included as described above.

The information stored in the contact management information table is subjected to aggregation processing, for example, by receiving a request for aggregation from the business operator terminal device 100-3. As an example, information indicating a ratio of the number of actual contacts with the business operator to the number of accesses to the web page, information indicating a time taken from the access to the web page or an operation on the contact information until the contact with the business operator is performed, information indicating a comparison of a ratio of contact with the business operator between cases where the notification information is outputted and cases where the notification information is not outputted, and the like are generated.

### 7. Flow of Process of User Terminal Device 100-1

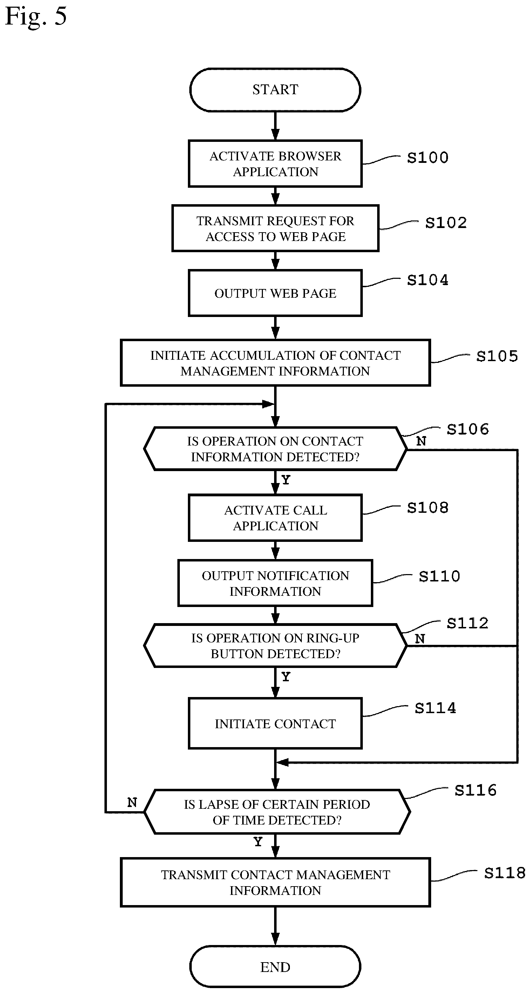

Fig. 5 is a diagram illustrating a flow of a process executed by the user terminal device 100-1 according to an embodiment of the present disclosure. The flow of the process is mainly performed by the processor 112 of the user terminal device 100-1 reading and executing programs stored in the memory 113.

As illustrated in Fig. 5, the processor 112 of the user terminal device 100-1 detects a user's operation for activating a browser application program via the input interface 116 (S100). The processor 112 activates the browser application program according to the detected operation. Note that, in the following description, it will be assumed that a web page provided by a business operator (e.g., a landing page for a service provided by a business) is outputted by the browser application program. However, the present disclosure is not limited to this case, and any application program may be used as long as a web page can be outputted.

Next, the processor 112 of the user terminal device 100-1 detects, via the input interface 116, an operation for accessing the web page 142 provided by the business operator (e.g., a landing page for a service provided by the business operator). For example, the operation is performed by the user searching for the web page in a search engine through the browser application program, and selecting a desired web page from the search result. According to the detected operation, the processor 112 transmits a request for access to the web page 142 provided by the business operator via the communication interface 114 (S102). Here, the web page 142 is generally configured by an HTML file in which character data, layout and structures and settings of individual components are described in HTML, which is a markup language, a CSS file in which instructions and settings regarding layout, appearance, and the like are described, JavaScript (registered trademark) that is a simple computer program enabling special effects, interactive operations, and the like, hyperlinks for referring to other web pages, and combinations thereof. Therefore, the request for access includes a request for transmitting various types of information constituting the web page 142.

Furthermore, in the present embodiment, the configuration and layout of the web page 142 are changed depending on the OS of the user terminal device 100-1 or the type of terminal device 100. Specifically, for example, in a case where the OS or the terminal device 100 supports a call based on the mobile phone communication system using the call application program, the contact information included in the web page 142 includes a description for activating the communication application program so that the user can operate on the contact information indicating a contact point of the business operator. On the other hand, in a case where the OS or the terminal device 100 supports a call based on the mobile phone communication system, the description is not included in the web page 142. Therefore, the request for access transmitted in S102 further includes information indicating a type of terminal device 100 or the OS of the user terminal device 100-1.

Next, the processor 112 receives, via the communication interface 114, various types of information constituting the web page 142 received from a server device (not illustrated) in response to the request for access to the web page 142. Upon receiving the received various types of information, the processor 112 outputs the web page 142 to the display 140, via the output interface 111, based on the various types of information (S104). Then, the processor 112 starts a process for accumulating contact management information in the memory 113 on the basis of JavaScript (registered trademark) constituting the received web page 142, the contact management information including a history of processes performed until the user terminal device 100-1 contacts the business operator (e.g., the information illustrated in Fig. 4) (S105). Here, the processor 112 starts measuring a time, using a timer, for which the contact management information is accumulated (not illustrated), and stores the access time information in the memory 113 as contact management information.

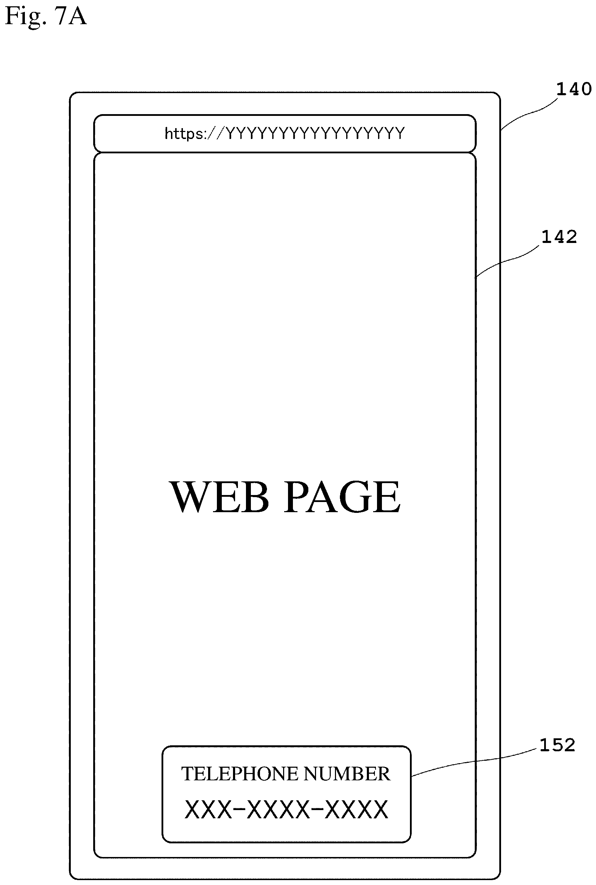

Here, Fig. 7A is a diagram illustrating an example of a screen outputted to the display 140 during the process of the user terminal device 100-1. Specifically, Fig. 7A is a diagram illustrating an example of a screen outputted to the display 140 in S104 of Fig. 5. According to Fig. 7A, the received web page 142 is constituted in accordance with an HTML file, a CSS file, or the like and is outputted to the display 140. As an example, the web page 142 is a landing page for a product or a service provided by a business operator, and includes information such as content, price, and usage example of the product or the service. In the present embodiment, in addition to this information, contact information 152 (e.g., telephone number XXX-XXXX-XXXX) for contacting the business operator is further included. The user can activate the call application program for contacting the business operator by performing an operation (e.g., a tap operation) on the contact information 152 via the input interface 116.

Note that, although the contact information 152 includes a display of a telephone number and a call button for activating the call application program, and the tap operation is performed on the call button in the example of Fig. 7A, but the present disclosure is, of course, not limited to this example. For example, the call application program may be activated upon a tap operation being performed on the display of the phone number without including the call button. Alternatively, the call application program may be activated by selecting a portion where the telephone number is displayed by an operation (such as holding it down) and further selecting a ring-up menu from a function menu. It is not necessary to explicitly describe the telephone number, and only a phone-shaped icon or mark or a text indicating that a call is available may be displayed.

Referring back to Fig. 5, the processor 112 determines whether or not a user's operation on the contact information 152 outputted to the display 140 is detected via the input interface 116 (S106). The processor 112 proceeds to the process in S108 if a user's operation on the contact information 152 is detected (Y), and proceeds to the process in S116 if this is not detected (N).

Upon detecting the user's operation on the contact information 152, the processor 112 acquires operation time information at which the operation is performed as contact management information, stores the operation time information in the memory 113, and activates the call application program for contacting the business operator (S108). Here, as described above, the call application program cannot be used in a case where the OS or the terminal device 100 is of a type that does not support a call based on the mobile phone communication system. Therefore, even if the contact information 152 is included in the web page 142, the information is merely presented, and even if an operation on the contact information 152 is detected, the call application program is not activated. That is, the activation of the call application program by the processor 112 is performed depending on the type of the terminal device 100 or the OS installed in the user terminal device 100-1.

Next, the processor 112 transmits a request for transmitting notification information to the server device via the communication interface 114, and outputs the received notification information to the display 140 via the output interface 111 (S110). In addition, the processor 112 stores the outputted notification information as contact management information in the memory 113.

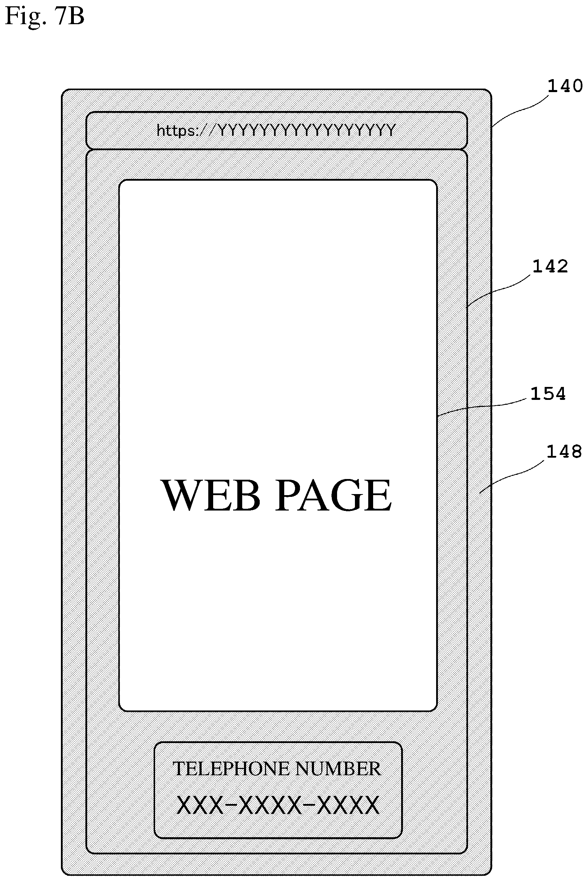

Here, Fig. 7B is a diagram illustrating an example of a screen outputted to the display 140 during the process of the user terminal device 100-1. Specifically, Fig. 7B is a diagram illustrating an example of a screen outputted to the display 140 in S110 of Fig. 5. According to Fig. 7B, the notification information 154 is outputted around substantially the center of the display 140 in a superimposed manner on the web page 142 outputted in Fig. 7A. In the notification information 154, information for encouraging a contact with the business operator is outputted in relation to a product or a service introduced on the web page provided by the business operator. Examples of the notification information include campaign information, discount information, coupon information, benefit information, tutorial information, information on similar products and similar services, information on other products and services often used together with the product or service, store information, or a combination thereof for the product or service.

Furthermore, the notification information 154 is outputted in an emphasized manner when compared to a peripheral region 148 around the region where the notification information is outputted. As a result, the user can focus on the notification information 154 rather than the information of the web page 142 displayed in a superimposed manner. Note that, although the processor 112 outputs the notification information 154 in an emphasized manner by performing control such that the luminance of the notification information 154 is higher than that of the peripheral region 148 in the example of Fig. 7B, this may be done by increasing the saturation or brightness of the notification information 154, decreasing the proportion of black pixels, changing the border around notification information 154, or a combination thereof, as well as the above-described processing. Furthermore, although the notification information 154 is outputted around substantially the center of the display 140, the notification information 154 may be outputted at any position.

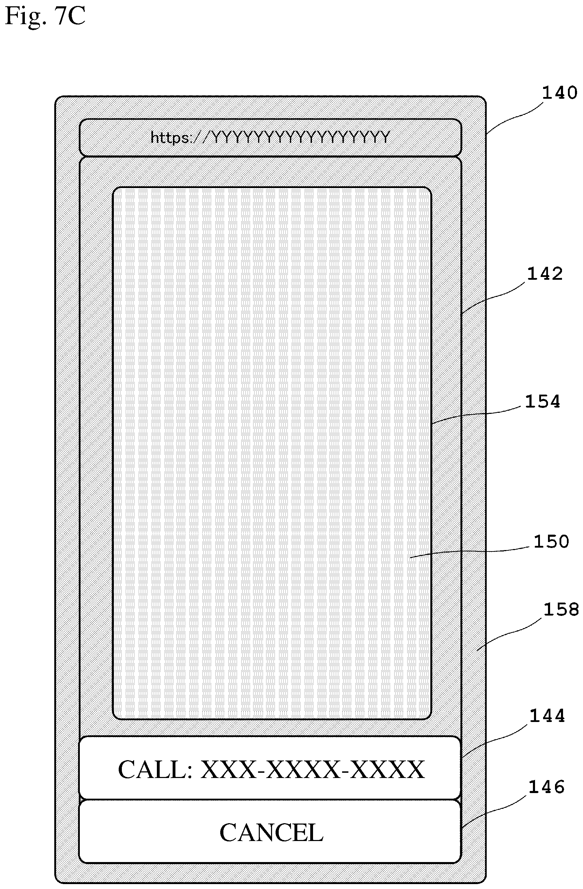

Next, Fig. 7C is a diagram illustrating an example of a screen outputted to the display 140 during the process of the user terminal device 100-1. Specifically, Fig. 7C is an example of a screen outputted to the display 140 in S110 of Fig. 5, and is a diagram illustrating an example of a screen outputted after the screen illustrated in Fig. 7B is outputted. According to Fig. 7C, if a predetermined time elapses after the notification information 154 of Fig. 7B is outputted and the call application program is activated, the processor 112 outputs the screen of Fig. 7C.

In the screen illustrated in Fig. 7C, the notification information 154 is outputted around substantially the center of the display 140 in a superimposed manner on the web page 142 outputted in Fig. 7A, following the screen of Fig. 7B. In addition, as the call application program is activated, the ring-up button 144 and the cancel button 146 are outputted on the screen. That is, while the web page 142 and the notification information 154 are outputted by the browser application program, the ring-up button 144 and the cancel button 146 are outputted by the call application program. Then, as the user operates the ring-up button 144 via the input interface 116, a call is made to the contact point of the business operator via the mobile phone communication system, and a contact with the business operator is initiated. On the other hand, if the user operates the cancel button 146 via the input interface 116, the process for the contact with the business operator is canceled, and the screen returns to the screen illustrated in Fig. 7A.

Here, the ring-up button 144 and the cancel button 146 are outputted in an emphasized manner when compared to a peripheral region 150 around the region where they are outputted. The notification information 154 is also included in the peripheral region 150. As a result, the user focuses on the ring-up button 144 and the cancel button 146 rather than the notification information 154, making it easier to operate these buttons. At this time, the notification information 154 is outputted in a relatively less emphasized state as compared with the ring-up button 144 and the cancel button 146. However, it is necessary to output the notification information 154 to be visible to the user, rather than making the notification information 154 completely invisible to the user. By outputting the notification information 154 in a visible state, it is possible to improve the probability that the ring-up button 144 is actually operated to contact the business operator.

Note that, in the example of Fig. 7C, the processor 112 outputs the ring-up button 144 and the cancel button 146 in an emphasized manner by performing control such that the luminance of the ring-up button 144 and the cancel button 146 is higher than that of the peripheral region 150. However, the emphasized outputting is not limited thereto, and may be performed by increasing the saturation or brightness of the ring-up button 144 and the cancel button 146, decreasing the proportion of black pixels, changing the border around the notification information 154, or a combination thereof.

Furthermore, in addition, the notification information 154 may be outputted in an emphasized manner when compared to a region 158 which is a region where the notification information 154 is excluded from the peripheral region 150. That is, in this case, degrees of emphasis are placed on the ring-up button 144 and the cancel button 146, the notification information 154, and the region 158 in a descending order. By doing so, the visibility of the notification information 154 is sufficiently secured, making it easy for the user to focus on the notification information 154, although it is inferior to the visibility of the ring-up button 144 and the cancel button 146. Note that the emphasis can be adjusted, for example, by changing the luminance, the saturation, the brightness, the proportion of black pixels, the border, or a combination thereof as described above.

In addition, according to the example of Fig. 7C, the call application program is activated, and the ring-up button 144 and the cancel button 146 are outputted to the display 140. In addition, a screen including the notification information 154 outputted by the browser application program is also outputted at the same time. That is, the screen outputted by activating the communication application program is not outputted on the entire screen of the display 140 but is outputted on a portion of the display 140. As a result, in addition to the ring-up button 144 and the cancel button 146 outputted by the call application program, the notification information 154 outputted by the browser application program can be outputted simultaneously to the display 140.

Referring back to Fig. 5, the processor 112 determines whether or not an operation on the ring-up button 144 is detected on the screen illustrated in Fig. 7C via the input interface 116 (S112). Then, if an operation on the ring-up button 144 is detected (Y), the processor 112 performs control to initiate a contact (ringing-up) based on the mobile phone communication system using the call application program (S114). At this time, the processor 112 displays the call application program on the front side via the output interface 111, and terminates the outputting of the notification information on the display 140. Then, the processor 112 starts counting the time after the notification information is outputted in S110 and stops the counting by the outputting of the notification information being terminated by detecting the operation on the ring-up button 144 and initiating the contact. Then, the processor 112 acquires a time at which the output of the notification information is terminated by detecting the operation on the ring-up button 144 and initiating the contact as contact time information (contact management information), and acquires a time from the start to the stop of counting the time as output time information (contact management information), and stores the acquired times in the memory 113. On the other hand, if an operation on the ring-up button 144 is not detected and an operation on the cancel button 146 is detected (N), the processor 112 similarly stops counting the time, acquires the time as output time information (contact management information), and stores the time in the memory 113. Then, the processor 112 proceeds to the process in S116.

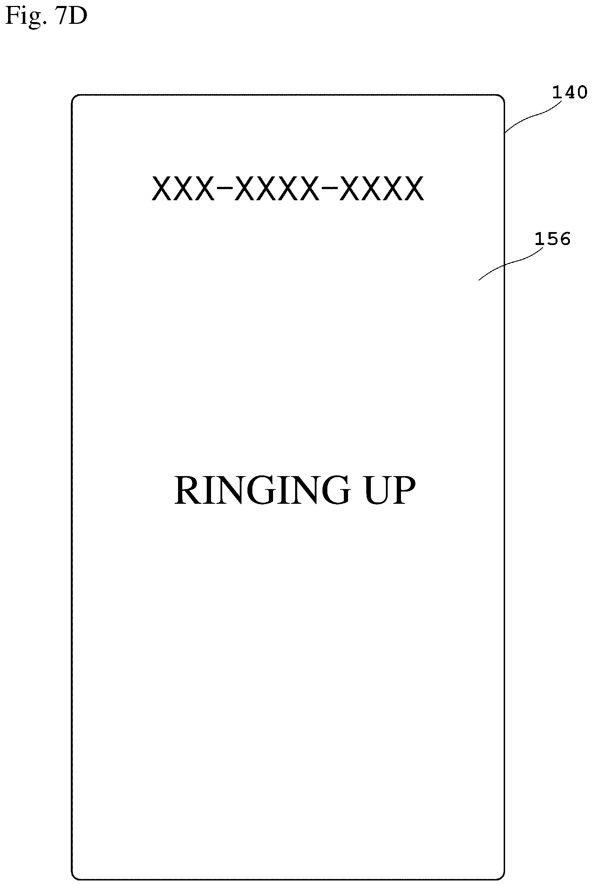

Here, Fig. 7D is a diagram illustrating an example of a screen outputted to the display 140 during the process of the user terminal device 100-1. Specifically, Fig. 7D is an example of a screen outputted to the display 140 in S114 of Fig. 5, and is a diagram illustrating an example of a screen outputted after an operation on the ring-up button 144 is detected on the screen illustrated in Fig. 7C.

According to Fig. 7D, instead of the screens of the browser application program outputted to the display 140 in Figs. 7A to 7C, a screen 156 of the call application program is outputted to the entire screen of the display 140. On the screen 156, a telephone number (XXX-XXXX-XXXX), which is a contact point of the business operator, is displayed, and "RINGING UP" indicating that a contact is currently being made.

Referring back to Fig. 5, the processor 112 detects whether or not a certain period of time has elapsed since the timer started measuring the time in order to accumulate contact management information in S105 (S116). If it is determined that the certain period of time has elapsed (Y), the processor 112 transmits information (access time information, operation time information, notification information, output time information, contact time information, etc.) stored as the contact management information in the memory 113, in association with the access identification information, to the administrator terminal device 100-2 via the communication interface 114 (S118). Then, the flow of the process ends.

As described above, in the flow of the process, if an operation on the contact information is detected, the ring-up button 144 and the cancel button 146 are not simply outputted by the call application program, but the notification information is outputted together. As a result, the user is prevented from operating the cancel button 146 and abandoning contacting the business operator, which enables to make the user contact the business operator effectively. Furthermore, by performing processing depending on the type of terminal device 100 or the OS installed on the user terminal device 100-1, a more appropriate processing becomes possible. Furthermore, by outputting the notification information to be visually distinguishable from the ring-up button 144 and the cancel button 146, it is possible to improve convenience for the user.

### 8. Flow of Process of Administrator Terminal Device 100-2

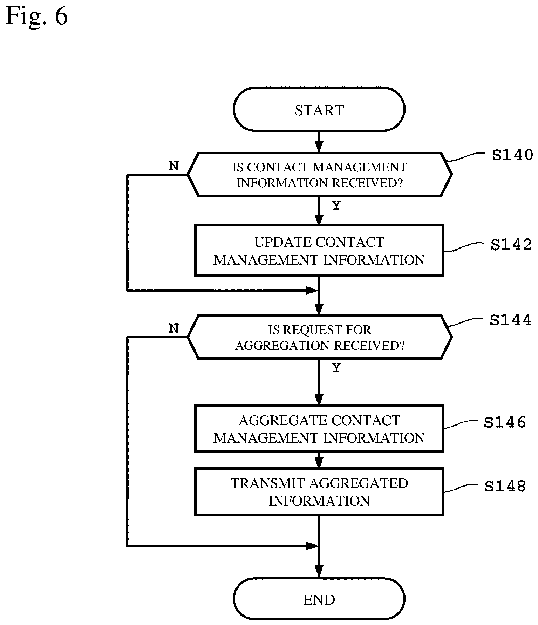

Fig. 6 is a diagram illustrating a flow of a process executed by the administrator terminal device 100-2 according to an embodiment of the present disclosure. Specifically, Fig. 6 illustrates a flow of a process related to the aggregation of the contact management information received from the user terminal device 100-1 in the flow of the process illustrated in Fig. 5. The flow of the process is mainly performed by the processor 112 of the administrator terminal device 100-2 reading and executing programs stored in the memory 113 at a predetermined cycle.

As illustrated in Fig. 6, the processor 112 of the administrator terminal device 100-2 determines whether an interrupt signal according to the reception of the contact management information has been received from the user terminal device 100-1 via the communication interface 114 (S140). Then, if it is determined that the contact management information has been received (Y), the processor 112 updates and stores the received contact management information in the contact management information table (Fig. 4) in association with access identification information received together with the contact management information (S142). If the contact management information has not been received (N), the process is not performed.

Next, the processor 112 determines whether or not an interrupt signal according to the reception of the request for aggregating the contact management information has been received from the business operator terminal device 100-3 via the communication interface 114 (S144). Then, if it is determined that a request for aggregation has been received (Y), the processor 112 aggregates the contact management information desired by the request for aggregation, referring to the contact management information table (S146). The processor 112 transmits the aggregated information to the business operator terminal device 100-3 that has transmitted the request for aggregation via the communication interface 114 (S148). Note that, if a request for aggregation has not been received (N), the process is not performed. Then, the flow of the process ends.

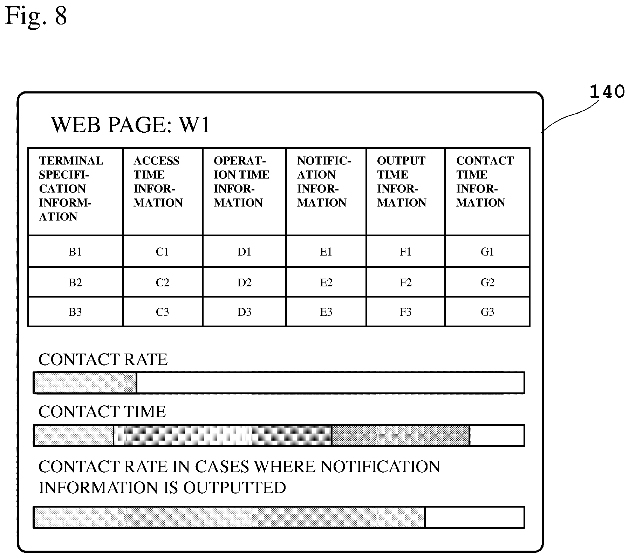

Here, Fig. 8 is a diagram illustrating an example of a screen outputted to the display 140 during the process of the business operator terminal device 100-3. Specifically, Fig. 8 is a diagram illustrating an example of a case where aggregation information transmitted from the administrator terminal device 100-2 to the business operator terminal device 100-3 is outputted to the business operator terminal device 100-3. That is, Fig. 8 is a diagram illustrating an example of aggregation information aggregated by the administrator terminal device 100-2.

According to Fig. 8, referring to the contact management information table, the processor 112 of the administrator terminal device 100-2 acquires contact management information to which information for specifying a web page (e.g., web page identification information, which is not illustrated in Fig. 4) provided by a business operator that has transmitted a request for aggregation corresponds, and outputs the acquired contact management information as aggregation information. As an example, as illustrated in Fig. 8, terminal specification information for specifying a user terminal device 100-1 of a user who has accessed the web page identification information (e.g., "W1"), access time information, operation time information, notification information, output time information, contact time information, and the like are outputted as aggregation information.

In addition to this information, the processor 112 of the administrator terminal device 100-2 outputs a statistical value calculated using this information as aggregation information. As an example, by counting the number of times contact time information is stored, a ratio of the number of actual contacts to the number of accesses to the web page (web page identification information = "W1") is calculated and outputted as a "contact rate". Furthermore, for each of the actual contacts, information indicating a time taken from the access to the web page until the actual contact is performed is outputted as a "contact time" from a difference between the access time information and the contact time information. Furthermore, a ratio of the number of actual contacts after notification information is outputted to the number of accesses to the web page is calculated, and is outputted as a "contact rate for cases where the notification information is outputted". Note that the information illustrated in Fig. 8 is an example of aggregation information, and other information may be outputted.

As described above, in the present embodiment, it is possible to more effectively perform a contact with business operator providing a web page. In particular, when an operation on the contact information is detected, the ring-up button 144 and the cancel button 146 are not simply outputted by the call application program, but the notification information is outputted together. As a result, the user is prevented from operating the cancel button 146 and abandoning contacting the business operator, which enables to make the user contact the business operator effectively. Furthermore, by performing processing depending on the type of terminal device 100 or the OS installed on the user terminal device 100-1, the processing can be performed more appropriately. Furthermore, by outputting the notification information to be visually distinguishable from the ring-up button 144 and the cancel button 146, it is possible to improve convenience for the user.

### 9. Modification

In the above-described embodiment, if an operation on contact information is detected in a web page, the call application program is activated, and the ring-up button 144, etc., are outputted together with the notification information. However, this is not limitative, and the call application program may be activated after a predetermined time elapses after an operation on the contact information is performed and notification information is outputted.

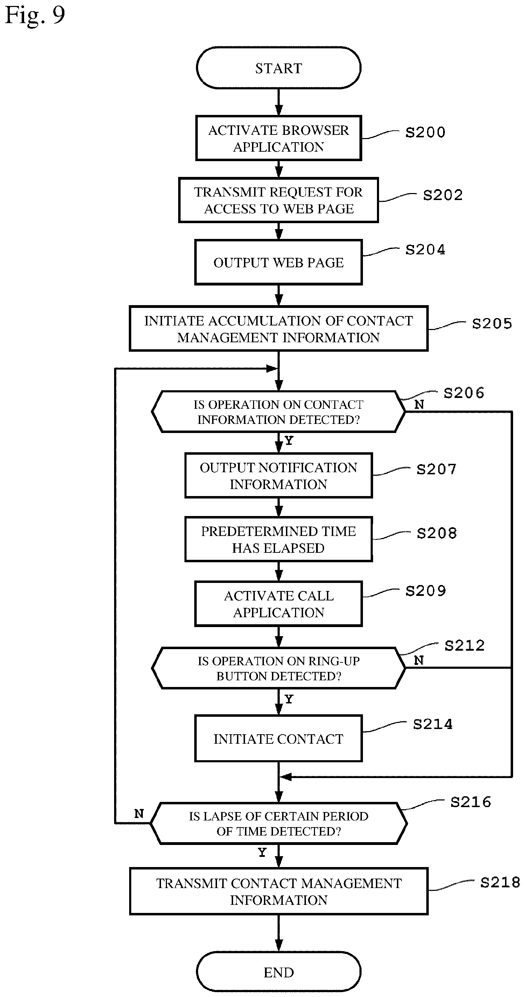

Fig. 9 is a diagram illustrating a flow of a process executed by the user terminal device 100-1 according to an embodiment of the present disclosure. Specifically, the flow of the process is mainly performed by the processor 112 of the user terminal device 100-1 reading and executing programs stored in the memory 113.

As illustrated in Fig. 9, the flow of the process is started by the processor 112 of the user terminal device 100-1 detecting an operation for activating the browser application program via the input interface. Since the process related to S200 to S206 is the same as the process related to S100 to S106 of Fig. 5, detailed description thereof will be omitted.

Next, upon detecting an operation on the contact information (S206), the processor 112 outputs notification information to the display 140 via the output interface 111 (S207). At this time, as an example, the notification information is outputted in a superimposed manner on the web page, but the ring-up button and the like are not outputted yet because the call application program has not yet been activated. Thereafter, if a predetermined time has elapsed (S208), the processor 112 activates the call application program and outputs a screen of the call application program to an entire screen of the display 140 (S209). On the screen, a ring-up button is outputted together with a telephone number that is a contact point of the business operator. That is, in this case, the outputting of the notification information to the display 140 is terminated.

Thereafter, if an operation on the ring-up button is detected, a contact with the business operator is initiated. Since the subsequent process is similar to S112 to S118 of Fig. 5, detailed description thereof will be omitted.

As described above, in the modification, it is possible to more effectively contact a business operator providing a web page. In particular, if an operation on contact information is detected, notification information is outputted before the ring-up button is simply outputted by the call application program. As a result, the user is prevented from operating the cancel button and abandoning contacting the business operator, which enables to make the user contact the business operator effectively. Although not specifically described, the modification can also achieve effects similar to the above-described embodiment.

In addition, it has been described above that a contact between the user of the user terminal device 100-1 and the business operator is performed using the mobile phone communication system. However, for the contact between the user and the business operator, an alternative method other than the method using the mobile phone communication system, for example, an e-mail, an SNS, an online meeting, or the like may be used. In this case, displayed content such as the ring-up button 144 and content of processes executed by the processor 112 of the user terminal device 100-1 and the processor 112 of the administrator terminal device 100-2 in a case where these buttons are operated may be appropriately changed depending on alternative means.

Furthermore, it has been described above that the browser application program is used to display the web page 142 in the user terminal device 100-1. However, it is not necessary to use the web page 142. For example, the web page 142 may be replaced with a screen of a dedicated application program that operates on the user terminal device 100-1 in order for a business operator to provide business to a user. Furthermore, the web page 142 may be replaced with, for example, a screen for the SNS or the online meeting.

In addition, not only the device explicitly described in the embodiment, but also software, hardware, or a combination thereof may be used for realization. Specifically, the processes and procedures described in the present specification can be realized by implementing logic corresponding to the processes in media such as an integrated circuit, a volatile memory, a non-volatile memory, a magnetic disk, and an optical storage. Furthermore, the processes and procedures described in the present specification can be implemented as a computer program, and can be executed by terminal devices and various computers including the terminal devices.

The processes and procedures described as being performed by a single device, a single piece of software, a single component, and/or a single module in the present specification can be performed by multiple devices, multiple pieces of software, multiple components, and/or multiple modules. Furthermore, various types of information described as being stored in a single memory and storage device in the present specification can be stored in a distributed manner in a plurality of memories included in a single device or in a plurality of memories arranged in a distributed manner in a plurality of devices. Furthermore, a plurality of pieces of software and hardware described in the present specification can be realized by integrating them into fewer components or by decomposing them into more components.

Although the embodiment of the present invention has been described, the embodiment is presented as an example, and is not intended to limit the scope of the invention. This novel embodiment can be implemented in various other forms, and various omissions, substitutions, and changes can be made without departing from the gist of the invention. The embodiment and modifications thereof fall within the scope and gist of the present invention, and fall within the scope of the invention set forth in the claims and the equivalent thereof.

### Reference Signs List

- 1: System
- 16: Communication network
- 100: Terminal device
- 100-1: User terminal device
- 100-2: Administrator terminal device
- 100-3: Business operator terminal device
- 111: Output interface
- 112: Processor
- 113: Memory
- 114: Communication interface
- 115: Communication processing circuit
- 116: Input interface
- 117: Mouse
- 118: Hard key
- 140: Display
- 142: Web page
- 144: Ring-up button
- 146: Cancel button
- 148: Peripheral region
- 150: Peripheral region
- 152: Contact information
- 154: Notification information
- 156: Screen
- 158: Region

## Claims

1. A terminal device comprising at least one processor, wherein the at least one processor configured to execute processes to:
detect, via an input interface, a user's operation on contact information of a business operator included in a screen outputted by an application program provided by the business operator;
output, via an output interface, notification information related to the screen and an execution button for executing a contact with the business operator based on the contact information in response to the detection; and
initiate the contact with the business operator based on the contact information if a user's operation on the execution button is detected via the input interface.

2. The terminal device according to claim 1, wherein the execution button is outputted by executing a contact application program for executing the contact.

3. The terminal device according to claim 1, wherein the notification information and the execution button are outputted to a display via the output interface, and
the execution button is outputted on the display in a more emphasized manner than the notification information.

4. The terminal device according to claim 3, wherein the execution button when outputted to the display has a higher luminance than the notification information when outputted to the display.

5. The terminal device according to claim 3, wherein the execution button and the notification information are outputted to the display without overlapping each other.

6. The terminal device according to claim 1, wherein the execution button is outputted by a contact application program for executing the contact if a predetermined time elapses after the notification information is outputted.

7. A method executed by at least one processor included in a computer, the method comprising:
detecting, via an input interface, a user's operation on contact information of a business operator included in a screen outputted by an application program provided by the business operator;
outputting, via an output interface, notification information related to the screen and an execution button for executing a contact with the business operator based on the contact information in response to the detection; and
initiating the contact with the business operator based on the contact information if a user's operation on the execution button is detected via the input interface.

8. A program for causing at least one processor included in a computer to function to execute processes for:
detecting, via an input interface, a user's operation on contact information of a business operator included in a screen outputted by an application program provided by the business operator;
outputting, via an output interface, notification information related to the screen and an execution button for executing a contact with the business operator based on the contact information in response to the detection; and
initiating the contact with the business operator based on the contact information if a user's operation on the execution button is detected via the input interface.
